# EUROPÄISCHE PATENTSCHRIFT

(11) **EP 0 677 906 B1**
(45) Veröffentlichungstag und Bekanntmachung des Hinweises auf die Patenterteilung: **23.12.1998**
(21) Anmeldenummer: 95103296.0
(22) Anmeldetag: 08.03.1995
(51) Int. Cl.: H02G 3/12

(54) **Einbaugehäuse für wenigstens ein elektrisches Installationsgerät**
Flush mounted box for at least one electrical apparatus
Boîtier pour montage encastré pour au moins un appareil électrique

(30) Priorität: 16.04.1994 DE 9406360 U
(43) Veröffentlichungstag der Anmeldung: 18.10.1995
(73) Patentinhaber: Albert Ackermann GmbH & Co. KG, 51643 Gummersbach (DE)
(72) Erfinder: Eicher, Helmut, D-57482 Wenden (DE)
(74) Vertreter: Wilhelm & Dauster Patentanwälte European Patent Attorneys

(56) Entgegenhaltungen:
- EP-A- 0 391 713
- EP-A- 0 473 482
- DE-A- 3 643 559
- DE-A- 4 120 939
- DE-U- 8 314 320

## Beschreibung

Die Erfindung betrifft ein Einbaugehäuse für wenigstens ein elektrisches Installationsgerät, das in einen Wandinstallationskanal durch eine offene Frontseite hindurch einsetzbar und ortsfest in diesem arretierbar ist.

Aus der EP 0 391 713 A2 ist ein Wandinstallationskanal für elektrische Installationsgeräte bekannt, bei denen das jeweilige Installationsgerät mittels einer dieses allseitig umschließenden Einbaudose in den Wandinstallationskanal eingesetzt wird.

Aus dem DE-GM 83 14 320 ist ein Wandinstallationskanal bekannt, der zu einer Frontseite hin offen ist, die auch die einem Benutzer zugewandte Sichtseite bildet. Der Wandinstallationskanal weist im Inneren eine entlang seines Bodens verlaufende C-förmige Montageschiene auf, in der mit Hilfe von als Einbaugehäuse dienenden Gerätedosen entsprechende elektrische Installationsgeräte arretierbar sind, die von der Sichtseite aus in den Wandinstallationskanal eingesetzt sind. In den Bereichen des Wandinstallationskanales, in denen keine elektrischen Installationsgeräte eingebaut sind, ist die Öffnung des Wandinstallationskanales zur Sichtseite hin durch eine Abdeckung verschlossen, die plattenartig ausgebildet ist. Die Abdeckung ist mit den die sichtseitige Öffnung des Wandinstallationskanales flankierenden Längskanten des Wandinstallationskanales verrastet. Dazu sind die gegenüberliegenden Längskanten entlang der Öffnung des Wandinstallationskanales nutartig ausgebildet. Die Abdeckung weist flügelartig nach außen und nach unten gekrümmte längsseitige Stützstege auf, die sich beim Aufsetzen der Abdeckung auf die Öffnung des Wandinstallationskanales in den Längsnuten des Wandinstallationskanales abstützen. Außerdem weist die Abdeckung zu jedem Stützsteg eine im aufgesetzten Zustand der Abdeckung lotrecht nach innen ragende Haltenase auf, die den Rand der korrespondierenden Längskante der Öffnung des Wandinstallationskanales in der Position hintergreift, in der der Stützsteg sich in der Längsnut des Wandinstallationskanales abstützt. Damit die Einbaugehäuse für die elektrischen Installationsgeräte in der C-förmigen Montageschiene des Wandinstallationskanales montiert werden können, müssen sie eine an die Tiefe des Wandinstallationskanales angepaßte Höhe aufweisen. Ein Einbau von miniaturisierten Elektroinstallationsgeräten mit vergleichsweise geringen Abmessungen, wie sie von der Firma Legrand unter der Bezeichnung "Mosaik" bekannt sind, ist ohne den Einsatz eines zusätzlichen Adapters nicht möglich.

Es ist zwar auch bekannt, in die Frontaufnahme des Kanales einklipsbare, rahmenartige Geräteeinbaudosen (Prospekt Thorsmann MIB der Fa. Thorsmann & Co. GmbH, D-58540 Meinerzhagen) einzusetzen, die seitlich verschiebbare und mit Klemmschrauben arretierbar sind. Diese Geräteeinbaudosen müssen aber nach vorne durch spezielle Abdeckplatten abgeschlossen werden.

Aufgabe der Erfindung ist es, ein Einbaugehäuse der eingangs genannten Art zu schaffen, mittels der insbesondere miniaturisierte elektrische Installationsgeräte ohne die Verwendung zusätzlicher Einrichtungen oder Abdeckungen in einfacher Weise in den Wandinstallationskanal eingesetzt werden können.

Diese Aufgabe wird dadurch gelöst, daß das Einbaugehäuse als U-förmiges Profil gestaltet ist, daß die Breite des Einbaugehäuses an die Breite der Öffnung in der Frontseite des Wandinstallationskanales angepaßt ist und die gegenüberliegenden Seitenwandungen des Einbaugehäuses mit jeweils einem Einhängerand versehen sind, der jeweils mit einer die Öffnung flankierenden Längskante des Wandinstallationskanales beim Einsetzen in die Öffnung verrastbar und so bemessen ist, daß die Außenseite des Einbaugehäuses im eingesetzten Zustand mit der Frontseite des Wandinstallationskanales fluchtet, und daß die Tiefe des Einbaugehäuses derart auf die Höhe des wenigstens einen Installationsgerätes abgestimmt ist, daß im eingebauten Zustand die Oberkante des Installationsgerätes bündig mit der sichtseitigen Außenseite des Einbaugehäuses abschließt. Durch die erfindungsgemäße Lösung wird das Einbaugehäuse nicht mehr - wie beim Stand der Technik - an seinem Boden mit der C-förmigen Montageschiene an der Rückwand des Wandinstallationskanales verbunden, sondern mittels der Einhängeränder im Bereich der sichtseitigen Längskante an der Vorderseite des Wandinstallationskanales. Dadurch kann die Tiefe des Einbaugehäuses unabhängig von der Tiefe des Wandkanales gewählt werden, so daß auch miniaturisierte Installationsgehäuse in handelsübliche Wandkanäle ohne die Verwendung von Adaptern o.ä. eingebaut werden können. Außerdem ist es möglich, die Installationsgeräte in das Einbaugehäuse einzusetzen und bereits anschlußfertig zu verdrahten, bevor sie dann in einem Arbeitsgang in einfacher Weise in den Wandinstallationskanal einsetzbar sind. Die Montagezeit am Wandinstallationskanal vor Ort wird dadurch erheblich reduziert. Eine gesonderte Abdeckung entfällt. Durch die Abstimmung der Tiefe des Einbaugehäuses auf die Höhe des wenigstens einen Installationsgerätes sind die Installationsgeräte zum einen ästhetisch ansprechend in den Wandinstallationskanal eingebettet, zum anderen sind sie von der Sichtseite her gut zugänglich.

Dadurch, daß die Installationsgeräte bereits in dem Einbaugehäuse arretiert werden und anschließend lediglich das Einbaugehäuse an der Vorderseite des Wandinstallationskanales verrastet wird, kann die C-förmige Montageschiene im Wandinstallationskanal entfallen. Durch die Verwendung miniaturisierter Elektroinstallationsgeräte kann eine relativ große Anzahl von Elektroinstallationsgeräten in den Wandinstallationskanal eingebaut werden, wodurch der Nutzungsgrad des Wandinstallationskanales erhöht ist.

In Ausgestaltung der Erfindung sind die Seitenwandungen des Einbaugehäuses seitlich nach außen jeweils mit einem längsverlaufenden, sich auf der korrespondierenden Längskante des Wandinstallationskanales abstützenden Stützsteg und einem die Stützposition des Einbaugehäuses am Wandinstallationskanal fixierenden Sicherungswulst versehen. Dadurch wird beim Einsetzen des Einbaugehäuses in den Wandinstallationskanal immer eine gleichbleibende definierte Position erreicht, die durch den Sicherungswulst auf jeder Seite des U-Profiles auch gesichert ist. Durch die Sicherungswülste auf beiden Außenseiten des U-Profiles wird das Einbaugehäuse in seiner in den Wandinstallationskanal eingesetzten Position formschlüssig arretiert.

In weiterer Ausgestaltung der Erfindung ist das Innere des Einbaugehäuses mit Rastelementen zum Arretieren des wenigstens einen Installationsgerätes versehen. Dadurch ist es möglich, die Installationsgeräte in einfacher Weise in das Einbaugehäuse einzurasten, ohne daß zusätzliche Befestigungselemente oder Werkzeuge benötigt werden.

In weiterer Ausgestaltung der Erfindung ist das Innere des Einbaugehäuses mit wenigstens einer Montagespur zum Einbau von Zusatzeinrichtungen versehen. Dadurch ist es möglich, je nach Bedarf Sicherungsautomaten, Zugentlastungen, Verteilerklemmen oder ähnliches einzubauen. Außerdem können in eine solche Montagespur Schraubklemmanschlüsse eingesetzt werden, um das Einbaugehäuse in eine entsprechende Schutzmaßnahme miteinzubeziehen.

In weiterer Ausgestaltung der Erfindung ist das U-Profil des Einbaugehäuses endseitig jeweils mittels eines Endstückes verschließbar. Das Verschließen des Einbaugehäuses ist in einfacher Weise mittels direkt eindrehbarer Blechschrauben möglich.

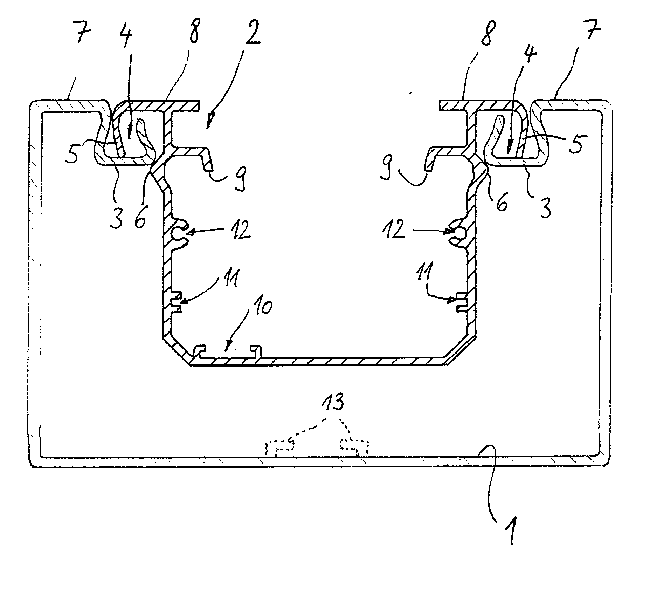

Weitere Vorteile und Merkmale der Erfindung ergeben sich aus den Unteransprüchen. Nachfolgend wird ein Ausführungsbeispiel der Erfindung beschrieben und anhand der Zeichnung dargestellt.

Die einzige Zeichnung zeigt in einem Querschnitt das Profil eines erfindungsgemäßen Einbaugehäuses in seiner in einem Wandinstallationskanal eingebauten Position.

Ein Wandinstallationskanal (1) für die Aufnahme elektrischer Installationsgeräte weist ein etwa C-förmiges offenes Hohlprofil auf, das über seine gesamte Länge zu einer Frontseite (7) hin offen ist. In der Zeichnung zeigt die Frontseite (7) nach oben und eine Rückwand des Wandinstallationskanales (1) nach unten. In seiner fest installierten Position an einer vertikalen Wand liegt jedoch die Rückwand des Wandinstallationskanales (1) an dieser vertikalen Wand an, wodurch die Frontseite (7) ebenfalls vertikal ausgerichtet ist und die Öffnung des Wandinstallationskanales (1) nach vorne gerichtet ist. Der Wandinstallationskanal (1) ist in dieser eingebauten Position daher gegenüber der Zeichnung um 90° verdreht. Der Wandinstallationskanal (1) ist beim Ausführungsbeispiel ein Aluminiumprofil, bei nicht dargestellten Ausführungsbeispielen besteht er aus Kunststoff. Der Wandinstallationskanal (1) weist auf seiner Frontseite (7) zwei die Öffnung im montierten Zustand oben und unten - d.h. an ihren seitlichen Längsrändern - flankierende Längskanten (4) auf, die jeweils als zur Frontseite (7) hin offene, U-förmige Haltenuten geformt sind. Die Öffnung des Wandinstallationskanales (1) zur Frontseite (7) hin ist in den Bereichen, die nicht mit in die Öffnung eingesetzten elektrischen Installationsgeräten belegt sind, mit einer oder mehreren plattenartigen Abdeckungen verschlossen, die beim Ausführungsbeispiel ebenfalls aus Aluminium hergestellt sind. Jede Abdeckung ist mit den Längskanten (4) verrastet, wobei jede Abdeckung einerseits die Längskanten (4) hintergreifende Rastnasen und andererseits sich von der Frontseite (7) her jeweils an einem Boden (3) der als Haltenut ausgebildeten Längskanten (4) abstützende Stützflügel aufweist. Diese Abdeckungen entsprechen den in dem DE-GM 83 14 320 offenbarten Abdeckungen.

Zur Aufnahme elektrischer Installationsgeräte ist in den Wandinstallationskanal (1) gemäß der Zeichnung ein Einbaugehäuse (2) eingesetzt. Das Einbaugehäuse (2) ist ein vom Wandinstallationskanal (1) getrenntes Bauteil und weist ein im wesentlichen U-förmiges Profil auf, das im eingesetzten Zustand gemäß der Zeichnung zur Frontseite (7) hin offen ist. Das U-förmige Profil des Einbaugehäuses (2) ist beim Ausführungsbeispiel im Extrusionsverfahren aus Aluminium hergestellt. Bei einem nicht dargestellten Ausführungsbeispiel ist das Einbaugehäuse (2) aus Kunststoff hergestellt. Das Einbaugehäuse (2) weist eine Tiefe von etwa 50 mm auf und ist für den Einbau von miniaturisierten elektrischen Installationsgeräten geeignet. Das Einbaugehäuse (2) weist zwei gegenüberliegende, nach innen gerichtete und zum Boden des Einbaugehäuses (2) gekrümmte Aufnahmestege (9) auf, die zur Aufnahme der miniaturisierten Installationsgeräte dienen. Die Installationsgeräte werden in einfacher Weise von der offenen Seite her in das Einbaugehäuse (2) eingesetzt. Dabei werden die Aufnahmestege (9) während den Einsätzen jedes Installationsgerätes nach außen gespreizt, wodurch auch die Seitenwände des Einbaugehäuses (2) um ein geringes Maß seitlich nach außen gespreizt werden. Nach dem Erreichen der eingebauten Endposition rasten die Aufnahmestege (9) ein, wodurch jedes Installationsgerät formschlüssig in dem Einbaugehäuse (2) gehalten ist. Die lichte Weite zwischen den gegenüberliegenden Aufnahmestegen (9) beträgt beim Ausführungsbeispiel 40 mm. Die miniaturisierten Installationsgeräte weisen für das Einsetzen in das dargestellte Einbaugehäuse (2) eine quadratische Grundfläche von 45 mm auf.

Das Einbaugehäuse (2) wird von der Frontseite (7) her in die Öffnung des Wandinstallationskanales (1) zwischen den beiden Längskanten (4) eingesetzt, wobei sich das Einbaugehäuse (2) lediglich mittels seiner gegenüberliegenden längsverlaufenden seitlichen Einhängeränder (5, 8) an den Längskanten (4) des Wandinstallationskanales (1) abstützt. Die Tiefe des Einbaugehäuses (2) ist geringer als die des Wandinstallationskanales (1), so daß der Boden des Einbaugehäuses (2) sich in Abstand zur Rückwand des Wandinstallationskanales (1) befindet. Das Einbaugehäuse (2) ist im eingebauten Zustand so weit in den Wandinstallationskanal (1) eingesetzt, daß seine Außenseite (8) mit der Frontseite (7) des Wandinstallationskanales (1) fluchtet. Die Einhängeränder (5, 8) des Einbaugehäuses (2) weisen im Bereich der Außenseite (8) jeweils einen Stützsteg (5) auf, der etwa parallel zu den Seitenwandungen des Einbaugehäuses (2) nach unten gekrümmt ist. Jeder Stützsteg (5) verläuft auf beiden Seiten des Einbaugehäuses (2) über die gesamte Länge des U-förmigen Profils des Einbaugehäuses (2). Die gegenüberliegenden Seitenwandungen des Einbaugehäuses (2) weisen jeweils knapp unterhalb des freien Endes jedes Stützsteges (5) einen zur Außenseite gewölbten Sicherungswulst (6) auf, der ebenfalls Teil eines Einhängerandes ist und zur formschlüssigen Sicherung der eingesetzten Position des Einbaugehäuses (2) in nachfolgend noch näher beschriebener Weise dient.

Für den Einbau des Einbaugehäuses (2) in den Wandinstallationskanal (1) wird das Einbaugehäuse (2) so weit in die Öffnungs des Wandinstallationskanales (1) eingeschoben, bis die flügelartigen Stützstege (5) auf dem Boden (3) jeder nutartigen Längskante (4) des Wandinstallationskanales (1) anschlagen. In dieser Position befinden sich die Sicherungswülste (6) der Seitenwandungen des Einbaugehäuses (2) bereits knapp hinter der Innenkante jeder Längskante (4), so daß sie diese Innenkante hintergreifen. Das Einbaugehäuse (2) ist in dieser eingebauten Position daher zum einen gegen ein weiteres Hineindrücken in das Innere des Wandinstallationskanales (1) durch die Stützstege (5) und zum anderen gegen ein erneutes Herausnehmen aus dem Wandinstallationskanal (1) durch die die Längskanten (4) hintergreifenden Sicherungswülste (6) gesichert. Beim Einhängen des Einbaugehäuses (2) werden die Seitenwandungen des Wandinstallationskanales (1) durch das Entlanggleiten der Sicherungswülste (6) an den Innenseiten der Längskanten (4) leicht auseinandergespreizt und federn anschließend hinter den Sicherungswülsten (6) in der eingebauten Position wieder zusammen. Die Höhe der Stützstege (5) ist beim Ausführungsbeispiel so gewählt, daß die Außenseite (8) des Einbaugehäuses (2) bündig mit der Frontseite (7) abschließt. Das Einbaugehäuse (2) ist daher lediglich auf der Frontseite (7) mit dem Wandinstallationskanal verbunden, an seiner Rückwand jedoch frei.

Das U-Profil des Einbaugehäuses (2) erstreckt sich nicht über die gesamte Länge des Profiles des Wandinstallationskanales (1), sondern lediglich über die Länge, die der Anzahl der benötigten, nebeneinander angeordneten miniaturisierten Installationsgeräte entspricht. Die übrigen Bereiche der Öffnung des Wandinstallationskanales (1) zur Frontseite (7) hin sind - wie bereits beschrieben - durch Abdeckungen verschlossen, wobei jede Abdeckung seitlich bündig an das Einbaugehäuse (2) anschließt. Die Abdeckungen schließen daher auf die Zeichnung bezogen lotrecht zur Zeichenebene an das Einbaugehäuse (2) an. Die miniaturisierten Installationsgeräte sind so an den Aufnahmestegen (9) des Einbaugehäuses (2) eingerastet, daß ihre Oberkanten bündig mit der Außenseite (8) des Einbaugehäuses (2) abschließen. Die Außenseite (8) des Einbaugehäuses (2) bildet daher auch die Abdeckung für die Installationsgeräte, von denen eines gestrichelt angedeutet ist.

Ein Herausnehmen des Einbaugehäuses (2) aus dem Wandinstallationskanal (1) ist nach dem Aufsetzen der Abdeckungen auf die offenen Bereiche des Wandinstallationskanales (1) nicht mehr möglich, da die aufgesetzte Abdeckung ein Aufspreizen des Wandinstallationskanales (1) verhindert, wodurch die die Längskanten (4) hintergreifenden Sicherungswülste (6) des Einbaugehäuses (2) nicht frei werden.

Das Einbaugehäuse (2) ist durch seine einfache Einrasttechnik in jeden handelsüblichen Wandinstallationskanal (1) einsetzbar, solange eine ausreichend freie Tiefe im Inneren des Wandinstallationskanales (1) zur Verfügung steht. Für die Arretierung der Installationsgeräte sind keine C-förmigen Montageschienen (13) (gestrichtelte Darstellung) im Wandinstallationskanal (1) mehr nötig, so daß auch der Wandinstallationskanal (1) vereinfacht hergestellt werden kann. Das Einbaugehäuse (2) ist jedoch ohne weiteres auch in Wandinstallationskanäle (1) einsetzbar, die noch C-förmige Montageschienen (13) aufweisen. Dadurch ist es beispielsweise möglich, miniaturisierte Installationsgeräte mit in der Montageschiene (13) mittels Gerätedosen zu befestigenden Installationsgeräten zu kombinieren.

Im Inneren des Einbaugehäuses (2) sind an den gegenüberliegenden Seitenwandungen zwei Montagenuten (11) auf gleicher Höhe vorgesehen, die eine Aufnahmespur für die Montage zusätzlicher Einrichtungen wie Sicherungsautomaten, Zugentlastungen, Verteilerklemmen oder dergleichen bilden. Für den Einbau von Sicherungsautomaten ist in diese Montagespur (11) in einfacher Weise ein Blechteil einschiebbar, das die Hutschiene für den Automateneinbau beim Stand der Technik ersetzt. Dieses in die Montagenuten (11) eingeschobene Blechteil kann in gleicher Weise als Montageplatte für die oben beschriebenen Zugentlastungen oder Verteilerklemmen eingesetzt werden. Am Boden des Einbaugehäuses (2) ist zur Mittellängsebene seitlich versetzt eine weitere Montagespur (10) vorgesehen, die C-förmig einander zugewandte Haltenasen aufweist, die vom Boden des Einbaugehäuses (2) abragen. In diese Montagespur (10) sind Schraubklemmanschlüsse einsetzbar, wodurch das Einbaugehäuse (2) in eine entsprechende Schutzmaßnahme mit einbezogen werden kann. Das U-förmige Profil des Einbaugehäuses (2) weist etwa auf halber Höhe an beiden Seitenwandungen je eine sich über die gesamte Länge des U-förmigen Profiles erstreckende Anschraubspur (12) auf, in die jeweils endseitig Blechschrauben zur Fixierung je eines stirnseitigen Abschlußstückes für das Einbaugehäuse (2) direkt eindrehbar sind.

Selbstverständlich ist es auch möglich, das Einbaugehäuse (2) zur Aufnahme anderer als miniaturisierter Installationsgeräte einzusetzen, wodurch in einem Wandinstallationskanal die entsprechende C-förmige Montageschiene entfallen kann. Entscheidend ist, daß die Installationsgeräte mit der Außenseite (8) des Einbaugehäuses (2) fluchten, so daß dessen Außenseite (8), die wiederum mit der Frontseite (7) des Wandinstallationskanales (1) fluchtet, gleichzeitig die Abdeckung für die Installationsgeräte bildet. Gesonderte Abdeckplatten werden daher überflüssig.

## Patentansprüche

1. Einbaugehäuse für wenigstens ein elektrisches Installationsgerät, das in einen Wandinstallationskanal durch eine offene Längsseite hindurch einsetzbar und ortsfest in diesem arretierbar ist, dadurch gekennzeichnet, daß das Einbaugehäuse (2) als U-förmiges Profil gestaltet ist, daß die Breite des Einbaugehäuses (2) an die Breite der Öffnungen der Frontseite (7) des Wandinstallationskanales (1) angepaßt ist und die gegenüberliegenden Seitenwandungen des Einbaugehäuses (2) mit jeweils einem Einhängerand (5, 8) versehen sind, der jeweils mit einer die Öffnung flankierenden Längskante (4) des Wandinstallationskanales (1) beim Einsetzen in die Öffnung verrastbar und so bemessen ist, daß die Außenseite (8) des Einbaugehäuses im eingesetzten Zustand mit der Frontseite (7) des Wandinstallationskanales (1) fluchtet, und daß die Tiefe des Einbaugehäuses (3) derart auf die Höhe des wenigstens einen Installationsgerätes abgestimmt ist, daß im eingebauten Zustand die Oberkante des Installationsgerätes bündig mit der sichtseitigen Außenseite des Einbaugehäuses (2) abschließt.

2. Einbaugehäuse nach Anspruch 1, dadurch gekennzeichnet, daß die Seitenwandungen des Einbaugehäuses (2) seitlich nach außen jeweils mit einem längsverlaufenden, sich auf der korrespondierenden Längskante (4) des Wandinstallationskanales (1) abstützenden Stützsteg (5) und einem die Stützposition des Einbaugehäuses (2) am Wandinstallationskanal (1) fixierenden Sicherungswulst (6) versehen sind.

3. Einbaugehäuse nach Anspruch 2, dadurch gekennzeichnet, daß das Innere des Einbaugehäuses (2) mit Rastelementen (9) zum Arretieren des wenigstens einen Installationsgerätes versehen ist.

4. Einbaugehäuse nach Anspruch 1, dadurch gekennzeichnet, daß das Innere des Einbaugehäuses (2) mit wenigstens einer Montagespur (10, 11) zum Einbau von Zusatzeinrichtungen versehen ist.

5. Einbaugehäuse nach Anspruch 4, dadurch gekennzeichnet, daß das U-Profil des Einbaugehäuses (2) endseitig jeweils mittels eines Endstückes verschließbar ist.

## Claims

1. Assembly housing for at least one electrical installation device, which can be inserted in a wall installation duct, through an open longitudinal side, and secured in the duct in a fixed manner, characterised in that the installation housing (2) is in the form of a U-shaped profiled section, in that the width of the assembly housing (2) is adapted to the width of the openings of the front side (7) of the wall installation duct (1), and the opposite side walls of the assembly housing (2) are each provided with an inset edge (5, 8), each of which, when it is inserted in the opening, can be engaged with a longitudinal edge (4) of the wall installation duct (1), which longitudinal edge flanks the opening, and which inset edge has dimensions such that in the inserted condition, the outer side (8) of the assembly housing is flush with the front side (7) of the wall installation duct (1), and the depth of the assembly housing (3) is adapted to the height of the at least one installation device, such that in the inserted condition, the upper edge of the installation device is closed flush with the outer side, which is in view, of the assembly housing (2).

2. Assembly housing according to claim 1, characterised in that the side walls of the assembly housing (2) are each provided on the exterior with a spacer (5), which is disposed longitudinally, and is supported on the corresponding longitudinal edge (4) of the wall installation duct (1), and with a safety reinforcement (6), which locates the support position of the assembly housing (2) on the wall installation duct (1).

3. Assembly housing according to claim 2, characterised in that the interior of the assembly housing (2) is provided with locking elements (9), to lock the at least one installation device.

4. Assembly housing according to claim 1, characterised in that the interior of the assembly housing (2) is provided with at least one assembly track (10, 11), for installation of additional devices.

5. Assembly housing according to claim 4, characterised in that the U-shaped profiled section of the assembly housing (2) can be closed at its end by means of an end piece.

## Revendications

1. Boîtier encastré pour au moins un appareil d'installation électrique, qui peut être inséré par un côté longitudinal ouvert dans une gaine technique murale, et qui peut y être bloqué en position, caractérisé en ce que le boîtier encastré (2) est configuré comme un profil en U ; que la largeur du boîtier encastré (2) est adaptée à la largeur des ouvertures aménagées sur la face frontale (7) de la gaine technique murale (1) ; et que les parois latérales opposées du boîtier encastré (2) sont chacune pourvues d'un bord suspendu (5, 8), dont chacun peut, lors de son insertion dans l'ouverture, être encliqueté à l'aide d'une arête longitudinale (4), qui flanque l'ouverture, de la gaine technique murale (1), et qui est dimensionné de façon que la face extérieure (8) du boîtier encastré soit, à l'état inséré, en alignement avec la face frontale (7) de la gaine technique murale (1) ; et que la profondeur du boîtier encastré (2) est adaptée à la hauteur d'au moins un appareil d'installation de telle sorte que, à l'état encastré, l'arête supérieure de l'appareil d'installation se termine en alignement avec la face extérieure, côté observateur, du boîtier encastré (2).

2. Boîtier encastré selon la revendication 1, caractérisé en ce que les parois latérales du boîtier encastré (2) sont latéralement vers l'extérieur pourvues chacune d'une traverse d'appui (5), courant dans le sens longitudinal, qui s'appuie sur l'arête longitudinale correspondante (4) de la gaine technique murale (1), et d'un bourrelet de sécurité, qui fixe la position d'appui du boîtier encastré (2) contre la gaine technique murale (1).

3. Boîtier encastré selon la revendication 2, caractérisé en ce que l'intérieur du boîtier encastré (2) est pourvu d'éléments d'encliquetage (9) pour bloquer au moins un appareil d'installation.

4. Boîtier encastré selon la revendication 1, caractérisé en ce que l'intérieur du boîtier encastré (2) est pourvu d'au moins une piste de montage (10, 11) pour montage de dispositifs supplémentaires.

5. Boîtier encastré selon la revendication 4, caractérisé en ce que le profil en U du boîtier encastré (2) peut, en bout, être obturé à l'aide d'une pièce en bout.
